# EUROPEAN PATENT APPLICATION

(11) **EP 4 395 008 A1**
(43) Date of publication of application: **03.07.2024**
(21) Application number: 23777758.6
(22) Date of filing: 06.03.2023
(51) Int. Cl.: H01M 10/615, H01M 10/6571, H01M 10/625

(54) **BATTERY MODULE, BATTERY AND ELECTRICAL DEVICE**

(30) Priority: 01.04.2022 CN 202220746628 U
(71) Applicant: Contemporary Amperex Technology Co., Limited, Ningde, Fujian 352100 (CN)
(72) Inventor: HE, Fu, Ningde, Fujian 352100 (CN); XIAO, Lili, Ningde, Fujian 352100 (CN); LIU, Mengdong, Ningde, Fujian 352100 (CN); HUANG, Yuhua, Ningde, Fujian 352100 (CN)
(74) Representative: Rowlands, Stuart Michael
(86) International application number: PCT/CN2023/079727
(87) International publication number: WO 2023/185380

(57) **Abstract**

Disclosed in embodiments of the present application are a battery module, a battery and an electrical device. The battery module comprises: a plurality of battery cells, the plurality of battery cells being arranged in a first direction; a heating film extending in the first direction and attached to a first wall of each of the plurality of battery cells, the first wall being parallel to the first direction, and the heating film being used for heating the plurality of battery cells; and a protective film extending in the first direction and attached to the first surface of the heating film furthest from the battery cells, the protective film being used for protecting the heating film. According to the technical solution provided by the embodiments of the present application, physical protection can be provided for the heating film in the battery, so that the situation where a metal wire in the heating film is damaged or broken, etc. is avoided, and the overall safety and reliability of the heating film are improved, thereby improving the safety performance of the battery.

## Description

### Cross-Reference to Related Application

The patent application claims priority to Chinese Patent Application No. 202220746628.6, entitled "BATTERY MODULE, BATTERY, AND POWER CONSUMING DEVICE", filed on April 1, 2022, which is incorporated herein by reference in its entirety.

### Technical Field

The present application relates to the technical field of batteries, and in particular to a battery module, a battery, and a power consuming device.

### Background Art

With the increasing environmental pollution, more and more attention has been focused on new energy industry. In the new energy industry, battery technology is an important factor for development.

In the development of battery technology, the safety performance of batteries is also a noticeable issue. How to improve the safety performance of batteries is an urgent technical problem to be solved in the battery technology.

### Summary

In view of the above problem, embodiments of the present application provide a battery module, a battery and a power consuming device, in which a heating film inside the battery can be physically protected to prevent metal wire in the heating film from being damaged or broken, thereby improving the overall safety and reliability of the heating film and in turn improving the safety performance of the battery.

In a first aspect, a battery module is provided. The battery module includes: a plurality of battery cells arranged in a first direction; a heating film extending in the first direction and attached to a first wall of each of the plurality of battery cells, the first wall being parallel to the first direction, the heating film being configured to heat the plurality of battery cells; and a protective film extending in the first direction and attached to a first surface of the heating film away from the battery cell, the protective film being configured to protect the heating film.

In the embodiments of the present application, the battery module includes the plurality of battery cells arranged in the first direction and the heating film configured to heat the battery cells. The heating film is attached to the first walls of the plurality of battery cells, that is, the heating film also extends in the first direction. The battery module further includes the protective film configured to protect the heating film. Providing the protective film and allowing the protective film to be attached to the first surface of the heating film away from the battery cells can not only ensure the heating function of the heating film on the battery cells, but also physically protect the heating film to prevent metal wire in the heating film from being damaged or broken by external collisions, thereby improving the overall safety and reliability of the heating film and in turn improving the safety performance of the battery.

In a possible implementation, the protective film covers the first surface of the heating film.

In the embodiments of the present application, the protective film is attached to the side of the heating film away from the battery cells, that is, the protective film can physically protect the heating film without affecting the normal heating function of the heating film on the battery cells. The protective film extends in an extension direction of the heating film, that is, extends in the first direction, so that the protective film covers the first surface of the heating film and can fully protect the heating film, thereby further improving the protective effect of the protective film on the heating film. In addition, the one-piece protective film is also conducive to increasing the strength of the protective film itself.

In a possible implementation, the battery cell includes two first walls spaced apart from each other and arranged oppositely in a second direction, and the battery module includes two heating films respectively attached to the two first walls and two protective films respectively attached to the two heating films, the first direction being perpendicular to the second direction.

In the embodiments of the present application, providing the heating films on both sides of the battery cell can improve the heating effect on the battery cell. Providing the protective films on both sides can physically protect the heating films on both sides, thereby improving the overall safety performance of the battery.

In a possible implementation, the battery module further includes end plates arranged at two ends of the plurality of battery cells in the first direction, end portions of the heating film and the protective film in the first direction being fixedly connected to the end plates.

In the embodiments of the present application, the heating film is provided on the first walls of the battery cells, and the protective film is provided on the first surface of the heating film. Allowing the heating film and the protective film to be fixedly connected to the end plates of the battery module can avoid failure of the heating film and the protective film due to sliding from their original positions during transportation, etc. The fixed connection of the heating film and the protective film with the end plates of the battery module can ensure their normal operation.

In a possible implementation, the end portions of the protective film in the first direction are provided with holes, and the protective film is fixedly connected to the end plates through the holes.

In the embodiments of the present application, the protective film is fixedly connected to the end plates to achieve protection of the protective film on the heating film. The end portions of the protective film in the first direction are provided with the holes, and the protective film is fixedly connected to the end plates through the holes. This fixing method is simple to implement and highly operable, and is conducive to wide application in production.

In a possible implementation, the heating film is bonded to the first surface of the protective film.

In the embodiments of the present application, the heating film and the protective film are fixedly connected to the end plates, so as to maintain their functions in the battery module. The bonding of the first surface of the protective film to the heating film can further improve the fixing between the protective film and the heating film, so as to avoid failure of the fixed connection between the protective film and the end plates to cause the protective film to no longer protect the heating film.

In a possible implementation, the protective film has a thickness of 100 µm to 200 µm.

In the embodiments of the present application, the protective film that is too thin may fail to play a proper protective role, and the protective film that is too thick will increase the production cost. Allowing the thickness of the protective film to be between 100 µm and 200 µm can not only ensure the protective effect of the protective film itself, but also reduce the cost, which is conducive to mass production.

In a possible implementation, the protective film is made of a non-metallic material.

In the embodiments of the present application, the protective film is configured to physically protect metal wire in the heating film. Therefore, the protective film is preferably made of an insulating, non-metallic material. The protective film made of a non-metallic material can better protect the heating film than those made of other materials.

In a possible implementation, the protective film is made of a high polymer material.

In the embodiments of the present application, owing to the low cost of high polymer materials, the protective film made of a high polymer material can not only have a good protective effect, but also have a lower cost than those made of other non-metallic materials, which is conducive to wide application in actual production.

In a possible implementation, the protective film is made of polyethylene terephthalate or high polymer of polypropylene.

In the embodiments of the present application, using the protective film made of polyethylene terephthalate or high polymer of polypropylene can minimize the cost.

In a possible implementation, the protective film is made of a transparent material.

In the embodiments of the present application, the heating film is attached to the first walls of the plurality of battery cells to heat the plurality of battery cells, and the protective film is attached to the first surface of the heating film to physically protect the metal wire in the heating film so as to prevent the metal wire from being broken, etc. The protective film is made of the transparent material so that, during the operation, an operator can observe through the protective film whether there are wrinkles or other abnormalities in the heating film.

In a second aspect, a battery is provided. The battery includes: a case; and a battery module in the foregoing embodiments, the battery module being accommodated in the case.

In a third aspect, a power consuming device is provided. The power consuming device includes a battery in the foregoing embodiments, the battery being configured to supply electric energy.

### Brief Description of the Drawings

To more clearly illustrate the technical solutions of the embodiments of the present application, the accompanying drawings required in the embodiments of the present application will be briefly described below. It will be apparent that the accompanying drawings described below are merely some of the embodiments of the present application, and for those of ordinary skill in the art, other drawings can be obtained based on these accompanying drawings without any inventive efforts.
FIG. 1 is a schematic diagram of a structure of a vehicle according to an embodiment of the present application;
FIG. 2 is a schematic exploded view of a structure of a battery according to an embodiment of the present application;
FIG. 3 is a schematic exploded view of a structure of a battery cell according to an embodiment of the present application;
FIG. 4 is a schematic diagram of a structure of a battery module according to an embodiment of the present application;
FIG. 5 is a schematic diagram of a structure of a battery module according to another embodiment of the present application; and
FIG. 6 is a schematic diagram of a structure of a protective film according to an embodiment of the present application.

### Reference signs in the Detailed Description of Embodiments:

vehicle 1, battery 2, battery module 3, battery cell 6;
controller 11, motor 12, case 20, electrode assembly 61, shell 62, electrode terminal 63, connecting member 64, pressure relief mechanism 65, heating film 66, end plate 67, protective film 68;
first case portion 201, second case portion 202, accommodating space 203, housing 621, end cap 622, positive electrode terminal 631, negative electrode terminal 632, connecting wire harness 661, reserved slit 662, hole 681.

### Detailed Description of Embodiments

The embodiments of the technical solutions of the present application will be described below in detail with reference to the accompanying drawings. The following embodiments are merely intended to more clearly illustrate the technical solutions of the present application, and therefore merely serve as examples but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "including" and "having" and any variations thereof in the specification and the claims of the present application and in the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "multiple" means two or more, unless otherwise explicitly and specifically defined.

The phrase "embodiment" herein means that the specific features, structures or characteristics described with reference to the embodiment can be encompassed in at least one embodiment of the present application. The phrase at various locations in the specification does not necessarily refer to the same embodiment, or an independent or alternative embodiment exclusive of another embodiment. Those skilled in the art should understand explicitly or implicitly that the embodiment herein can be combined with other embodiments.

In the description of the embodiments of the present application, the term "and/or" is merely intended to describe the associated relationship of associated objects, representing that three relationships may exist. For example, A and/or B may be expressed as: only A exists, both A and B exist, and only B exists. In addition, the character "/" herein generally indicates an "or" relationship between the associated objects.

In the description of the embodiments of the present application, the term "multiple" means two or more (including two), similarly the term "multiple groups" means two or more groups (including two groups), and the term "multiple pieces" means two or more pieces (including two pieces).

In the description of the embodiments of the present application, the orientations or positional relationships indicated by the technical terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientations or positional relationships shown in the accompanying drawings, are merely intended to facilitate and simplify the description of the embodiments of the present application, rather than indicating or implying that the apparatus or element referred to must have a particular orientation or be constructed and operated in a particular orientation, and therefore cannot be construed as limiting the embodiments of the present application.

In the description of the embodiments of the present application, unless otherwise explicitly specified and defined, the technical terms such as "mounting", "connecting", "connection" and "fixing" should be understood in a broad sense. For example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

In the present application, the battery cell may be a lithium metal secondary battery, a sodium metal battery, a magnesium metal battery, etc., which will not be limited in the embodiments of the present application. The battery cell may be cylindrical, flat or have other shapes, which will not be limited in the embodiments of the present application. The battery cells are generally classified into three types depending on the way of package: cylindrical battery cells, prismatic battery cells and pouch battery cells, which will also not be limited in the embodiments of the present application. For ease of description, a lithium metal battery is taken as an example for description in the following embodiments.

A battery mentioned in the embodiments of the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matters from affecting charging or discharging of the battery cell(s).

With its gradual maturity, new energy technology is applied in more and more industries. In a new energy vehicle, a battery case is installed in the vehicle as an energy source. The battery in the battery case discharges to drive operation of an electric motor of the new energy vehicle. However, an existing battery case may be affected by the ambient temperature when in use. Taking a lithium-ion battery as an example, the battery has an extremely poor discharge capacity at a low temperature, and even if the battery is fully charged, the driving capacity of the vehicle will be greatly reduced. In addition, low-temperature charging greatly affects the service life of the traction battery, because at a low temperature, charged ions inside the battery have poor conductivity, and the transfer and embedding capabilities of the charges inside the structure of a negative material are also poor. If the battery is charged with normal current at a low temperature, a large number of lithium ions accumulate on, but cannot be embedded in, the surface of the negative electrode, and electrons will be deposited on the surface of the electrode to form pure lithium accumulation. However, metal lithium is very prone to uneven crystal growth, and when dendrites grow to a sufficient size, they may pierce a separator, resulting in direct connection between the positive electrode and the negative electrode, causing internal short circuit in the battery.

In order to solve the problem that the operation is affected when the battery case is interfered by the external temperature, it has been proposed to add, in the battery module in the battery case, a heating film that can heat the battery cells. The heating film is fixed to a side of the battery cell by means of bonding, and can generate heat when energized and transfer the heat to the battery cells so as to increase the operating temperature of the battery cells. However, at present, a heating layer of the heating film is generally made of copper wire. During the assembly process of the battery, the heating layer in the heating film is easy to be damaged or even broken. An energizing circuit in the heating film is a high-voltage circuit. When the copper wire is broken, two ends of the broken wire may be loaded with high voltage that will cause sparking and failure of the copper wire or the electrode, eventually resulting in fire and failure of the heating film or even the entire battery to cause serious safety accidents.

In order to solve the problem described above, the embodiments of the present application provide a technical solution, in which a heating film inside a battery is physically protected by means of a protective film so as to prevent metal wire in the heating film from being damaged or broken, thereby improving the overall safety and reliability of the heating film and in turn improving the safety performance of the battery.

The protective film described in the embodiments of the present application is suitable for use in a battery module, a battery, and a power consuming device using a battery.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembly power tool, and a railway power tool such as an electric drill, an electric grinder, an electric wrench, an electric screwdriver, an electric hammer, an electric impact drill, a concrete vibrator and an electric planer. The power consuming devices mentioned above are not specifically limited in the embodiments of the present application.

For ease of description, an example in which the power consuming device is a vehicle is taken for description in the following embodiments.

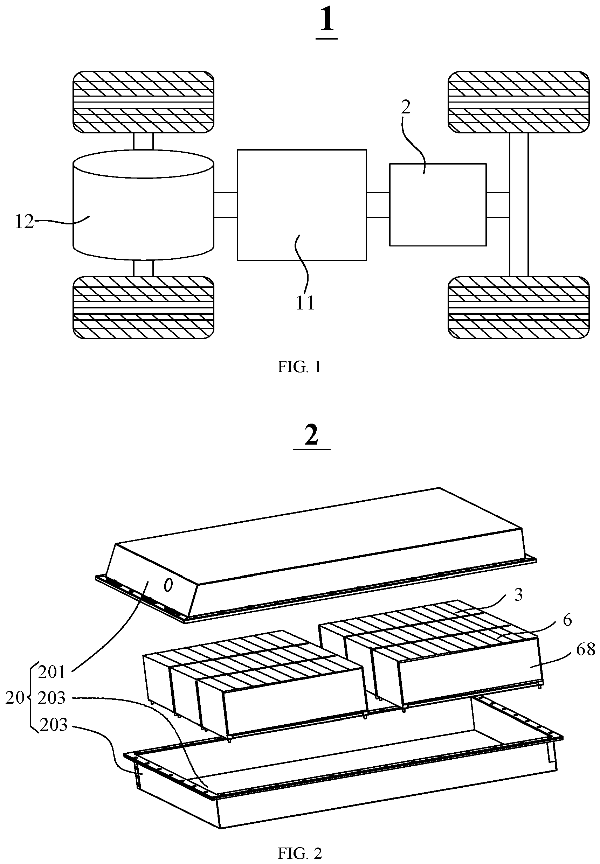

FIG. 1 is a schematic diagram of a structure of a vehicle 1 according to an embodiment of the present application. As shown in FIG. 1, a battery 2 is provided inside the vehicle 1, and the battery 2 may be arranged at the bottom, the head or the rear of the vehicle 1. The battery 2 can be used to supply power to the vehicle 1. For example, the battery 2 may serve as an operating power supply for the vehicle 1.

The vehicle 1 may further include a controller 11 and a motor 12. The controller 11 is used to control the battery 2 to supply power to the motor 12 to meet, for example, the operating power demand during starting, navigation and traveling of the vehicle 1.

In some embodiments of the present application, the battery 2 can not only serve as an operation power supply for the vehicle 1, but also serve as a driving power supply for the vehicle 1, in place of or partially in place of fuel or natural gas, to supply driving power to the vehicle 1.

FIG. 2 is a schematic exploded view of the battery 2 according to an embodiment of the present application. As shown in FIG. 2, the battery 2 includes a case 20, a battery module 3, a heating film 66 and a protective film 68 (the protective film 68 covers the heating film 66). The battery module 3 includes multiple battery cells 6. The battery module 3, the heating film 66 and the protective film 68 are accommodated in the case 20.

The case 20 is configured to accommodate the battery cells 6. The case 20 may be of various structures. In some embodiments, the case 20 may include a first case portion 201 and a second case portion 202, the first case portion 201 and the second case portion 202 fit together in a covering manner, and the first case portion 201 and the second case portion 202 jointly define an accommodating space 203 for accommodating the battery cells 6. The second case portion 202 may be of a hollow structure with one end open, the first case portion 201 is of a plate-like structure, and the first case portion 201 fits with the open side of the second case portion 202 in a covering manner to form the case 20 having the accommodating space 203. The first case portion 201 and the second case portion 202 may each also be of a hollow structure with one side open, and the open side of the first case portion 201 fits with the open side of the second case portion 202 in a covering manner to form the case 20 having the accommodating space 203. Of course, the first case portion 201 and the second case portion 202 may be in various shapes such as a cylinder and a cuboid.

To improve the sealing performance after the first case portion 201 is connected to the second case portion 202, a sealing member such as sealant or a sealing ring may be provided between the first case portion 201 and the second case portion 202.

Assuming that the first case portion 201 fits with the top of the second case portion 202 in a covering manner, the first case portion 201 may be referred to as an upper case cover, and the second case portion 202 may be referred to as a lower case body.

In the battery 2, multiple battery cells 6 are provided. The multiple battery cells 6 may be in series connection, in parallel connection or in series-parallel connection. The series-parallel connection means that some of the multiple battery cells 6 are in series connection and some are in parallel connection. The multiple battery cells 6 may be directly combined together in series connection, in parallel connection or in series-parallel connection, and then a unit composed of the multiple battery cells 6 is accommodated in the case 20. Of course, it is also possible that multiple battery cells 6 are in series connection, in parallel connection or in series-parallel connection to form a battery module (not shown), and then multiple battery modules are in series connection, in parallel connection or in series-parallel connection to form a unit and are accommodated in the case 20. The multiple battery cells 6 in the battery module may be electrically connected to each other by means of a busbar component so as to achieve the series connection, parallel connection or series-parallel connection between the multiple battery cells 6 in the battery module.

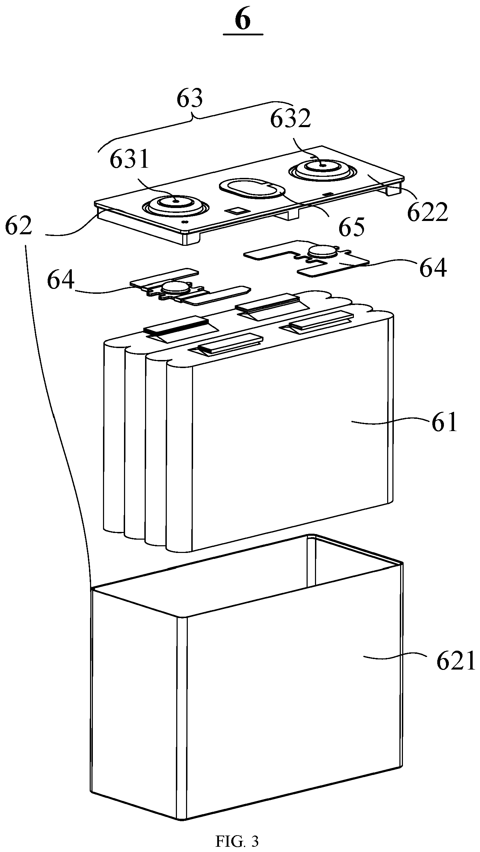

FIG. 3 is a schematic diagram of a structure of a battery cell 6 according to an embodiment of the present application. The battery cell 6 includes one or more electrode assemblies 61, a housing 621, and an end cap 622. The housing 621 and the end cap 622 form a shell or a battery box 62. Walls of the housing 621 and the end cap 622 are both referred to as walls of the battery cell 6. For a cuboid battery cell 6, the walls of the housing 621 include a bottom wall and four side walls. The housing 621 may be shaped depending on the shape of a combination of the one or more electrode assemblies 61. For example, the housing 621 may be a hollow cuboid, cube or cylinder, and one of faces of the housing 621 is provided with an opening through which the one or more electrode assemblies 61 can be placed into the housing 621. For example, when the housing 621 is a hollow cuboid or cube, one of flat faces of the housing 621 is an open face, that is, this flat face has no wall body so as to achieve communication between the inside and the outside of the housing 621. When the housing 621 is a hollow cylinder, an end face of the housing 621 is an open face, that is, this end face has no wall body so as to achieve communication between the inside and the outside of the housing 621. The end cap 622 covers the opening and is connected to the housing 621 to form an enclosed chamber for placing the electrode assembly 61. The housing 621 is filled with an electrolyte, such as an electrolytic solution.

The battery cell 6 may further include two electrode terminals 63. The two electrode terminals 63 may be arranged on the end cap 622. The end cap 622 is generally in the shape of a flat plate, the two electrode terminals 63 are fixed to a flat-plate face of the end cap 622, and the two electrode terminals 63 are respectively a positive electrode terminal 631 and a negative electrode terminal 632. Each electrode terminal 63 is correspondingly provided with a connecting member 64 (or referred to as a current collecting member 64) that is located between the end cap 622 and the electrode assembly 61 to achieve electrical connection between the electrode assembly 61 and the electrode terminal 63.

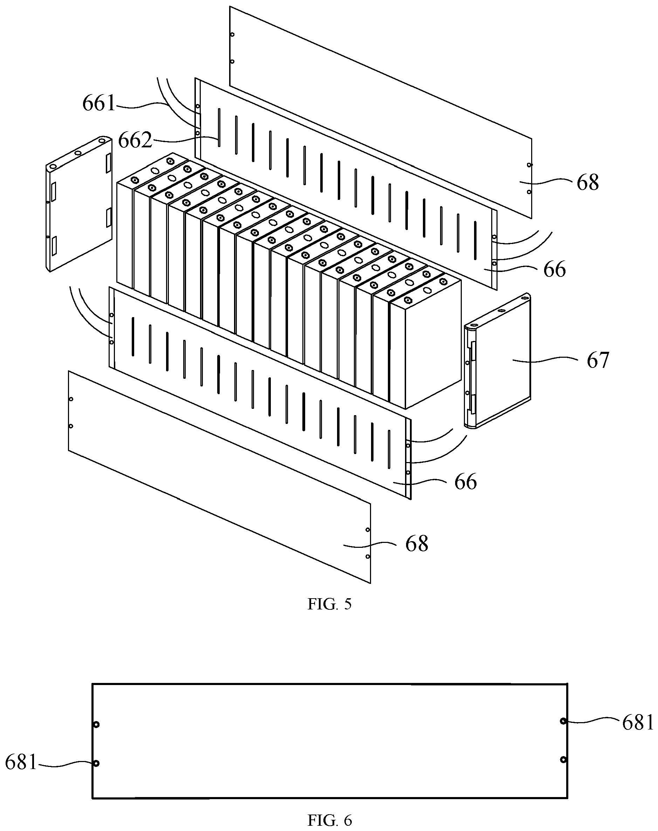

In the battery cell 6, according to the requirements in actual application, one or more battery assemblies 61 may be provided. As shown in FIG. 6, four independent battery assemblies 61 are provided in the battery cell 6.

The battery cell 6 may be further provided with a pressure relief mechanism 65. The pressure relief mechanism 65 is configured to be actuated, when the internal pressure or temperature of the battery cell 6 reaches a threshold, to relieve the internal pressure or temperature.

The pressure relief mechanism 65 may be of various possible pressure relief structures, which is not limited in the embodiments of the present application. For example, the pressure relief mechanism 65 may be a temperature-sensitive pressure relief mechanism that is configured to melt when the internal temperature of the battery cell 6 provided with the pressure relief mechanism 65 reaches a threshold; and/or the pressure relief mechanism 65 may be a pressure-sensitive pressure relief mechanism that is configured to fracture when the internal pressure of the battery cell 6 provided with the pressure relief mechanism 65 reaches a threshold.

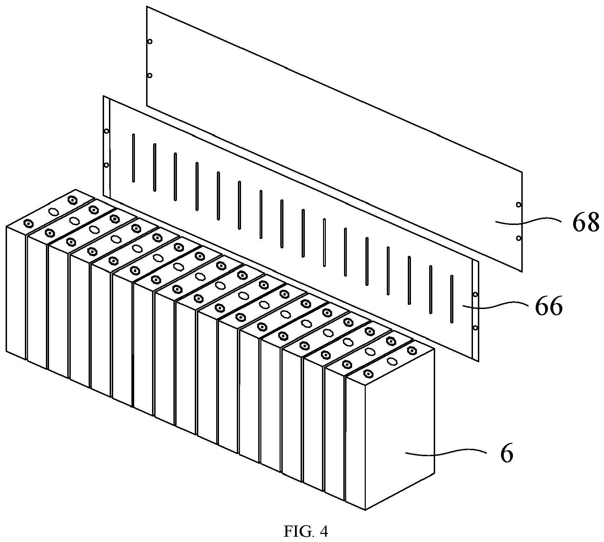

FIG. 4 is a schematic diagram of a structure of a battery module according to an embodiment of the present application. As shown in FIG. 4, the battery module 3 includes: multiple battery cells 6, the multiple battery cells 6 being arranged in a first direction; a heating film 66 extending in the first direction and attached to a first wall of each battery cell 6 of the multiple battery cells 6, the first wall being parallel to the first direction, the heating film 66 being configured to heat the multiple battery cells 6; and a protective film 68, the protective film 68 extending in the first direction and attached to a first surface of the heating film 66 away from the battery cells 6, the protective film 68 being configured to protect the heating film 66.

As mentioned above, in order to prevent the battery from being affected by external environments such as low temperature, the heating film 66 is attached to the first walls of the battery cells 6 in the battery module 3. In order to protect the heating film 66, the protective film 68 is attached to the first surface of the heating film 66 away from the battery cells 6 in the first direction.

In the foregoing solution, the battery module 3 includes the multiple battery cells 6 arranged in the first direction and the heating film 66 configured to heat the battery cells 6. The heating film 66 is attached to the first walls of the multiple battery cells 6, that is, the heating film 66 also extends in the first direction. The battery module 3 further includes the protective film 68, and the protective film 68 is configured to protect the heating film 66. Providing the protective film 68 and allowing the protective film 68 to be attached to the first surface of the heating film 66 away from the battery cells 6 can not only ensure the heating function of the heating film 66 on the battery cells 6, but also physically protect the heating film 66 to prevent metal wire in the heating film 66 from being damaged or broken by external collisions, thereby improving the overall safety and reliability of the heating film 66 and in turn improving the safety performance of the battery 2.

Optionally, the protective film 68 covers the first surface of the heating film 66.

The protective film 68 covers the heating film 66, and the protective film 68 can only protect the covered region of the heating film 66. The protective film 68 cannot protect the region of the heating film 66 that is not covered by the protective film 68.

In the foregoing solution, the protective film 68 is attached to the side of the heating film 66 away from the battery cells 6, that is, the protective film 68 can physically protect the heating film 66 without affecting the normal heating function of the heating film 66 on the battery cells 6. The protective film 68 extends in an extension direction of the heating film 66, that is, extends in the first direction, so that the protective film 68 completely covers the first surface of the heating film 66 and can fully protect the heating film 66, thereby further improving the protective effect of the protective film 68 on the heating film 66. In addition, the one-piece protective film 68 is also conducive to increasing the strength of the protective film 68 itself.

FIG. 5 is a schematic diagram of a structure of a battery module according to another embodiment of the present application. As shown in FIG. 5, the battery cell 6 includes two first walls spaced apart from each other and arranged oppositely in a second direction, and the battery module 3 includes two heating films 66 respectively attached to the two first walls and two protective films 68 respectively attached to the two heating films 66, the first direction being perpendicular to the second direction.

The heating film 66 may be arranged on one side or both sides of the battery cells 6. If both sides of the battery cells 6 are provided with the heating films 66, the heating films 66 have better heating effect on the battery cells 6.

In the foregoing solution, providing the heating films 66 on both sides of the battery cells 6 can improve the heating effect on the battery cells 6; and accordingly, providing the protective films 68 on both sides can physically protect the heating films 66 on both sides, thereby improving the overall safety performance of the battery.

Optionally, the battery module 3 further includes end plates 67. The end plates 67 are arranged at two ends of the multiple battery cells 6 in the first direction, and end portions of the heating film 66 and the protective film 68 in the first direction are fixedly connected to the end plates 67.

As shown in FIG. 5, a connecting wire harness 661 is provided on the heating film 66. The two heating films 66 on the battery cells 6 in the second direction are connected in series by means of the connecting wire harness 661 to jointly heat the battery cells 6. The positions of the heating film 66 and the protective film 68 in the battery cells 6 cannot be changed, in order to maintain their actions on the battery cells 6.

In the foregoing solution, the heating film 66 is arranged on the first walls of the battery cells 6, and the protective film 68 is arranged on the first surface of the heating film 66. Allowing the heating film 66 and the protective film 68 to be fixedly connected to the end plates 67 of the battery module 3 can fix the positions of the heating film 66 and the protective film 68 so as to avoid failure of the heating film 66 and the protective film 68 due to the heating film 66 and the protective film 68 sliding from their original positions during transportation, etc. The fixed connection of the heating film 66 and the protective film 68 with the end plates 67 of the battery module 3 can ensure their normal operation.

FIG. 6 is a schematic diagram of a structure of a protective film according to an embodiment of the present application. As shown in FIG. 6, the end portions of the protective film 68 in the first direction are provided with holes 681, and the protective film 68 is fixedly connected to the end plates 67 through the holes 681.

The protective film 68 is connected to the end plates 67 in various manners, as long as they are fixedly connected to each other, which is not limited in the present application. However, during the actual production process, choosing a convenient and highly operable connecting method is conducive to widespread promotion in practical applications.

In the foregoing solution, the protective film 68 is fixedly connected to the end plates 67 to achieve continuous protection of the protective film 68 on the heating film 66. The fixing method in which the end portions of the protective film 68 in the first direction are provided with the holes 681 so that the protective film 681 is fixedly connected to the end plates 67 through the holes 681 is simple to implement, is highly operable, and is conducive to wide application in production.

Optionally, the heating film 66 is bonded to the first surface of the protective film 68.

The heating film 66 and the protective film 68 are fixedly connected to the end plates 67, so as to maintain their functions in the battery module 3. If the method of fixing the heating film 66 and the protective film 68 to the end plates 67 is destroyed, the heating film and the protective film cannot be in action on the battery cells 6 in the battery module 3.

Bonding the heating film 66 to the battery cells 6 and bonding the heating film 66 to the first surface of the protective film 68 can further improve the fixing of the heating film 66 and the protective film 68 in the battery module 3, so as to avoid failure of the fixed connection between the protective film 68 and the end plates 67 to cause the protective film 68 to no longer protect the heating film 66. In addition, bonding the protective film 68 to the heating film 66 before the protective film 68 is fixedly connected to the end plates 67 can prevent separation of the protective film 68 and the heating film 66 during transportation.

Optionally, the protective film 68 has a thickness of 100 µm to 200 µm.

The thickness of the protective film 68 has certain effect on its performance. If the protective film 68 is too thin, the protective film 68 may fail to play a proper protective role; and the protective film 68 that is too thick will increase the production cost.

In the foregoing solution, allowing the thickness of the protective film 68 to be between 100 µm and 200 µm can not only ensure the protective effect of the protective film 68 itself, but also reduce the cost, which is conducive to mass production.

Optionally, the protective film 68 is made of a non-metallic material.

The non-metallic materials usually refer to glass, ceramics, graphite and rock which are mainly composed of inorganic substances, and wood, plastics and rubber which are main composed of organic substances, and are composed of crystalline or amorphous substances. In the embodiments of the present application, the metal wire in the heating film 66 is made of metal. Therefore, the protective film 68 in the present application may be made of glass, wood, plastics, rubber or other materials, that is, made of an insulating material.

In the foregoing solution, the protective film 68 is configured to physically protect the metal wire in the heating film 66. Therefore, the protective film 68 is preferably made of an insulating non-metallic material. The protective film 68 made of a non-metallic material can better protect the heating film 66 than those made of other materials.

Optionally, the protective film 68 is made of a high polymer material.

As shown in FIG. 5, reserved slits 662 are provided in the heating film 66. When the battery cells 6 are heated by the heating film 66, the battery cells 6 expand after being heated. In order to prevent irreversible deformation of the heating film 66 due to the expansion of the battery cells 6, the reserved slits 662 are provided in the heating film 66 to improve the deformation capability of the heating film 66.

In the embodiments of the present application, the protective film 68 may be made of a high polymer material, such as rubber, fiber and plastics, having good deformation capability so as to prevent the protective film 68 from being damaged due to its inadaptation to the deformation when the heating film 66 deforms.

In the foregoing solution, the protective film 68 made of a high polymer material can not only have good deformation capability and protective capability, but also have a lower cost than those made of other non-metallic materials, which is conducive to wide application in actual production.

Optionally, the protective film 68 is made of polyethylene terephthalate or high polymer of polypropylene.

In the foregoing solution, using the protective film 68 made of polyethylene terephthalate or high polymer of polypropylene can minimize the cost.

Optionally, the protective film 68 is made of a transparent material.

When the battery cells 6 is heated by the heating film 66, the heating effect on the battery cells 6 may be reduced if the surface of the heating film 66 is wrinkled, etc.

In the foregoing solution, the heating film 66 is attached to the first walls of the multiple battery cells 6 to heat the multiple battery cells 6; and the protective film 68 is attached to the first surface of the heating film 66 to physically protect the metal wire in the heating film 66 so as to prevent the metal wire from being broken. The protective film 68 is made of the transparent material, so that during the operation, an operator can observe through the protective film 68 whether there are wrinkles or other abnormalities in the heating film 66.

An embodiment of the present application further provides a battery 2, including: a case 20; and a battery module 3 according to the foregoing embodiments, the battery module 3 being accommodated in the case 20.

An embodiment of the present application further provides a power consuming device, including a battery 2 according to the foregoing embodiments, the battery 2 being configured to supply electric energy.

Although the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein, but includes all the technical solutions that fall within the scope of the claims.

## Claims

1. A battery module (3), comprising:
a plurality of battery cells (6), the plurality of battery cells (6) being arranged in a first direction;
a heating film (66) extending in the first direction and attached to a first wall of each battery cell (6) of the plurality of battery cells (6), the first wall being parallel to the first direction, the heating film (66) being configured to heat the plurality of battery cells (6); and
a protective film (68), the protective film (68) extending in the first direction and attached to a first surface of the heating film (66) away from the battery cell (6), the protective film (68) being configured to protect the heating film (66).

2. The battery module (3) according to claim 1, wherein the protective film (68) covers the first surface of the heating film (66).

3. The battery module (3) according to claim 1, wherein the battery cell (6) comprises two first walls spaced apart from each other and arranged oppositely in a second direction, and the battery module (3) comprises two heating films (66) respectively attached to the two first walls and two protective films (68) respectively attached to the two heating films (66), the first direction being perpendicular to the second direction.

4. The battery module (3) according to claim 1, the battery module (3) further comprising:
end plates (67) arranged at two ends of the plurality of battery cells (6) in the first direction, end portions of the heating film (66) and the protective film (68) in the first direction being fixedly connected to the end plates (67).

5. The battery module (3) according to claim 4, wherein the end portions of the protective film 68 in the first direction are provided with holes (681), and the protective film (68) is fixedly connected to the end plates (67) through the holes (681).

6. The battery module (3) according to any one of claims 1 to 5, wherein the protective film (68) is bonded to the first surface of the heating film (66).

7. The battery module (3) according to any one of claims 1 to 5, wherein the protective film (68) has a thickness of 100 µm to 200 µm.

8. The battery module (3) according to any one of claims 1 to 5, wherein the protective film (68) is made of a non-metallic material.

9. The battery module (3) according to any one of claims 1 to 5, wherein the protective film (68) is made of a high polymer material.

10. The battery module (3) according to claim 9, wherein the protective film (68) is made of polyethylene terephthalate or high polymer of polypropylene.

11. The battery module (3) according to any one of claims 1 to 5, wherein the protective film (68) is made of a transparent material.

12. A battery (2), comprising:
a case (20); and
a battery module (3) of any one of claims 1 to 11, the battery module (3) being accommodated in the case (20).

13. A power consuming device, comprising a battery (2) of claim 12, the battery (2) being configured to supply electric energy.
